# EUROPEAN PATENT SPECIFICATION

(11) **EP 1 720 007 B1**
(45) Date of publication and mention of the grant of the patent: **05.10.2011**
(21) Application number: 06075992.5
(22) Date of filing: 20.04.2006
(51) Int. Cl.: G01N 23/20, G01N 23/207

(54) **Method and apparatus for X-ray diffraction analysis**
Methode und Vorrichtung zur Röntgenbeugunsanalyse
Méthode et dispositif pour l'analyse par diffraction de rayons x

(30) Priority: 02.05.2005 EP 05076024
(43) Date of publication of application: 08.11.2006
(73) Proprietor: F. Hoffmann-La Roche Ltd., 4070 Basel (CH)
(72) Inventor: Grassman, Olaf, 79400 Kandern (DE); Hochstrasser, Remo, 4104 Oberwil (CH); Hennig, Michael, 79576 Weil am Rhein (DE); Schwitter, Urs, 4153 Reinach (CH)
(74) Representative: Bohest AG

(56) References cited:
- EP-A- 1 376 108
- WO-A-03/081221
- US-A1- 2004 208 284
- US-A1- 2005 002 487

## Description

### FIELD OF THE INVENTION

The invention concerns a method for transmission mode X-ray diffraction analysis of a sample by means of an apparatus comprising an X-Ray radiation source that provides X-ray radiation for irradiating said sample and a detector for detecting X-ray radiation transmitted through and diffracted by said sample.

The invention also concerns an apparatus for transmission mode X-ray diffraction analysis of a sample, said apparatus including an X-Ray radiation source that provides X-ray radiation for irradiating said sample and a detector for detecting X-ray radiation transmitted through and diffracted by said sample.

The invention further concerns a method for transmission mode X-ray diffraction analysis of a plurality of samples by means of an apparatus comprising an X-Ray radiation source and a detector for detecting X-ray radiation transmitted through and diffracted by said sample.

The invention further concerns an apparatus for transmission mode X-ray diffraction analysis of a plurality of samples by means of an apparatus comprising an X-Ray radiation source and a detector for detecting X-ray radiation transmitted through and diffracted by a sample.

### BACKGROUND OF THE INVENTION

Combinatorial chemistry refers to techniques to fabricate, test, and store the resulting data for a material library containing tens, hundreds or even thousands different materials or compounds. Combinatorial investigations require rapid screening techniques to test and evaluate variations of composition, structure and property within a material library. X-ray diffraction analysis is one of the most suitable screening techniques of solid state properties because abundant information can be revealed from the diffraction pattern and X-ray diffraction analysis is fast and non-destructive.

Diffraction pattern analysis plays an important role in such diverse applications as solving molecular structures, identifying compounds, and the fabrication of materials. If a compound can be made to crystallize into sizeable crystals, diffraction patterns from single crystals can provide a good deal of information about the crystal structure of the compound. Many compounds, however, can only be obtained as powders. Although a powder diffraction pattern yields much less information than that generated by a single crystal, it is unique to each substance with a particular crystal structure, and is therefore highly useful for purposes of identification.

Scattering of incident X-ray radiation from a sample of material can yield information about the atomic structure of the material. When such a beam of radiation strikes a sample, a pattern of diffracted radiation is created, which has a spatial intensity distribution that depends on the wavelength of the incident radiation and the atomic structure of the material and that can be recorded on a suitable detector such as a point detector, a 1D detector or a 2D detector. Diffraction analysis is the method of choice for studying crystalline materials, crystallization behavior and liquid, gel or solid phase, or phase transitions of materials.

In certain circumstances, it is desirable to perform a sample analysis using transmission mode X-ray diffraction analysis due to various reasons, including the need for low angle diffraction, and advantages when testing thin samples or samples in liquid environments.

A method and apparatus for performing transmission mode X-ray diffraction analysis of a sample is known, for example, from US 2004/0208284 or from US 2005/0002487.

In particular, US 2004/0208284 discloses an apparatus comprising a two-dimensional detector, an x-ray source, means for focusing or rendering parallel the x-ray beam emitted by the source, and means for rotating a substrate containing samples around an axis perpendicular to the plane of the substrate and for tilting this substrate around an axis contained in the plane of the substrate.

A problem that is encountered with known powder diffraction analysis equipment using a 2D detector is that during detection of the diffraction radiation, single diffraction spots and arcs are often observed instead of rings, especially when organic crystalline material (such as pharmaceuticals) is irradiated. This may be the result of the fact that not all lattice planes of the crystalline powder material have been exposed to X-ray radiation for the same time or same amount, because the crystals were not randomly oriented or only a few crystals were present. As a result, the peak intensities of the powder diffraction patterns recorded with a point or a 1D detector (one-dimensional detector) are not correct, and no representative 1D-powder diffraction pattern (intensity vs. diffraction angle 2θ.) is created. This causes problems during comparison of diffraction patterns for identification.

### SUMMARY OF THE INVENTION

A first aim of the invention is to provide a method and an apparatus of the above mentioned kind which make possible to perform X-ray transmission diffraction analysis with significantly improved particle statistics. Particle statistics is a term known in the art. With achieving "improved particle statistics" is meant obtaining a powder diffraction pattern with more reliable diffracted beam intensities, or diffracted beam intensities with reduced standard deviation.

A second and additional aim of the inventions is to provide a method and an apparatus of the above mentioned kind which make possible to perform X-ray transmission diffraction analysis of a plurality of samples in a time effective way.

According to a first aspect of the invention the above mentioned first aim is achieved by means of a method defined by claim 1. Claims 2 to 8 define preferred embodiments of this method.

According to a second aspect of the invention the above mentioned first aim is achieved by means of an apparatus defined by claim 9. Claims 10 to 16 define preferred embodiments of this apparatus.

One advantage obtained with the method and apparatus according to the first and second aspect of the invention is that they make possible to perform X-ray transmission diffraction analysis of a sample with significantly improved particle statistics.

According to a third aspect of the invention the above mentioned second aim is achieved by means of a method defined by claim 17. Claims 18 to 25 define preferred embodiments of this method.

According to a fourth aspect of the invention the above mentioned second aim is achieved by means of an apparatus defined by claim 26. Claims 27 to 33 define preferred embodiments of this apparatus.

One advantage obtained with the method and apparatus according to the third and fourth aspect of the invention is that they make possible to perform X-ray transmission diffraction analysis of a plurality of samples with significantly improved particle statistics and in a time effective way.

### BRIEF DESCRIPTION OF THE DRAWINGS

The subject invention will now be described in terms of its preferred embodiments with reference to the accompanying drawings. These embodiments are set forth to aid the understanding of the invention, but are not to be construed as limiting.
- Fig. 1: shows a schematic perspective view of a sample container of a multiple-sample holder shown by Fig. 10 and of a strip-shaped X-ray beam which irradiates a sample placed on a substrate.
- Fig. 2: shows a schematic cross-sectional view of a sample container taken along a plane which passes through a symmetry axis (shown in Fig. 1) of the sample container and which is the plane in which the X- ray beam extends.
- Fig. 3: shows a schematic top view of the sample container.
- Fig. 4: shows a schematic cross-sectional view of the sample container taken along a plane which passes through the symmetry axis and which is perpendicular to the plane in which the X-ray beam extends(tilting angle zero).
- Fig. 5: shows a schematic cross-sectional view of the sample container shown in Figures 1 to 4(sample container in a tilted position with a tilting angle T between the symmetry axis of the sample container and the plane in which the X-ray beam extends).
- Fig. 6: shows a schematic cross-sectional view of the structure of a first embodiment of an apparatus for carrying out a method according to the invention.
- Fig. 7: shows a schematic cross-sectional view of the structure of a second embodiment of an apparatus for carrying out a method according to the invention.
- Fig. 8: shows a schematic cross-sectional view of the structure of a third embodiment of an apparatus for carrying out a method according to the invention.
- Fig. 9: shows a schematic cross-sectional view of the structure of a fourth embodiment of an apparatus for carrying out a method according to the invention.
- Fig. 10: shows a schematic perspective view of an apparatus according to the invention for performing transmission mode X-ray diffraction analysis of a plurality of samples.
- Fig. 11: shows an X-Ray diffraction pattern which serves as reference for evaluating the quality of diffraction patterns obtained with different methods.
- Fig. 12: shows an X-Ray diffraction pattern obtained with a stationary sample.
- Fig. 13: shows an X-ray diffraction pattern obtained with a sample that is rotated 360 degrees during the detection of the radiation diffracted by a sample.
- Fig. 14: shows an X-ray diffraction pattern obtained with a sample that is tilted over a certain tilting angle and rotated 360 degrees during the detection of the radiation diffracted by a sample.
- Fig. 15: shows for the purpose of comparison 3 X-ray diffraction patterns obtained under the following conditions: the lower diffraction pattern is obtained with a stationary sample, the diffraction pattern in the center is obtained when the sample is rotated only during the measurement, the upper diffraction pattern is obtained with a sample that is rotated and tilted during the measurement.
- Fig. 16: shows a schematic cross-sectional view of an embodiment of a sample container wherein a foil is the bottom wall of the sample container.

### DETAILED DESCRIPTION OF PREFERRED EMBODIMENTS

In the following description the term "sample" is used to designate a sample comprising one or more crystals as well as a powder sample. A "powder sample" is defined herein as a powder sample of a compound of which the diffraction or crystallization behavior is to be determined. Such a compound may be a chemical substance, or a mixture of different substances. A compound may comprise an organic or organo-metallic molecular compound, such as a pharmaceutically active molecule or catalyst-ligand complex or a dimer, salt, ester, solvate or functional part thereof. A powder sample of the present invention may also comprise a biomolecule, for instance a nucleic acid (such as DNA, RNA and PNA), a polypeptide, peptides, glycoprotein and other proteinaceous substances, a lipoprotein, protein-nucleic acid complex, carbohydrate, biomimetic or a functional part, derivative and/or analogue thereof.

It is to be noted that the powder sample may indeed be in the form of a powder. The person skilled in the art of diffraction analysis understands, however, that a "powder sample" also includes a number of crystals which are contained in a solid material, such as is the case for metals, polymers, etc. Thus, in the latter case, the powder sample appears as a solid material in one piece. Moreover, the person skilled in the art of diffraction analysis understands that powder samples may comprise only a limited number of crystals.

### EXAMPLE 1: FIRST EMBODIMENT OF A METHOD ACCORDING TO THE INVENTION

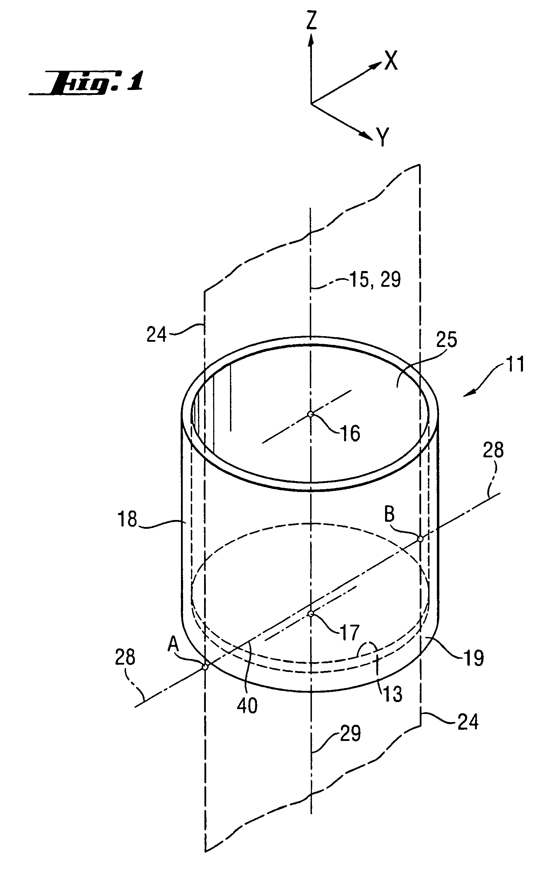

A first embodiment of a method according to the invention for transmission mode X-ray diffraction analysis of a single sample is described hereinafter with reference to Figures 1 to 5.

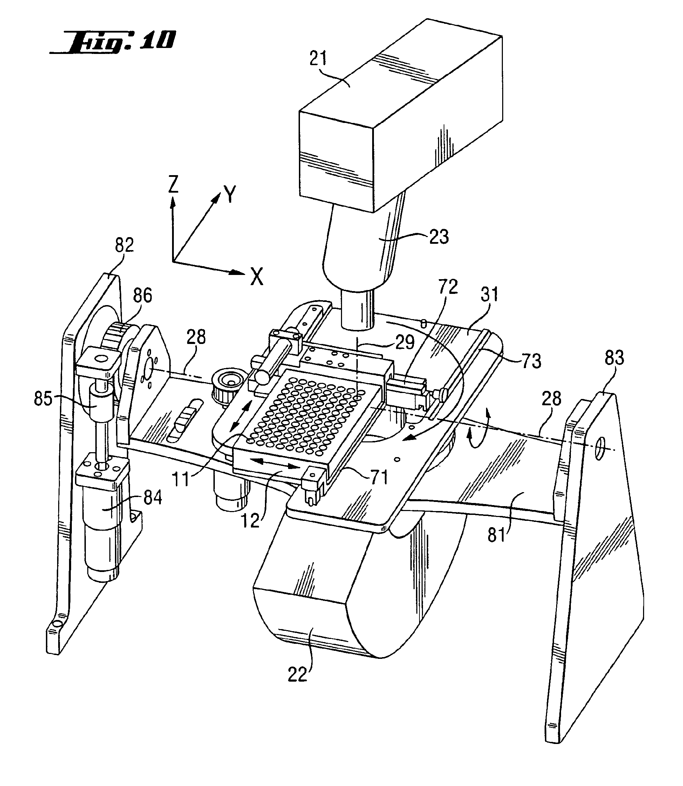

Fig. 1 shows a schematic perspective view of a sample container 11, which is e.g. a single well or one of the wells of a multiple-well tray 12 shown by Fig. 10, and of a strip-shaped X-ray beam 24 which irradiates a sample placed on a substrate 19 which is the bottom wall of sample container 11. Within the context of the invention the term "strip-shaped X-ray beam" means that this beam extends along a planar, strip-shaped irradiation region and that this beam has a cross section which is approximately rectangular.

Coordinate axis X, Y, Z which are normal to each other are shown in Fig. 1 for reference.

The region irradiated by X-ray beam is the volume over which the X-ray beam extends. If the X-ray beam has approximately the shape of a flat strip, then the shape of the irradiated region is strip shaped, that is the irradiated region has e.g. approximately the shape of a right rectangular prism, the length of the prism being much larger than its width and the width of the prism being much larger than its thickness.

The term "strip-shaped irradiation region" thus means that the length of the irradiated region is much larger than its width and that the width of the irradiated region is much larger than the thickness thereof.

In the attached drawings, and in particular in Figures 1, 2, 4 and 5, strip-shaped X-ray beam 24 is schematically represented as a plane, but in fact only the central part of the beam extends along a plane.

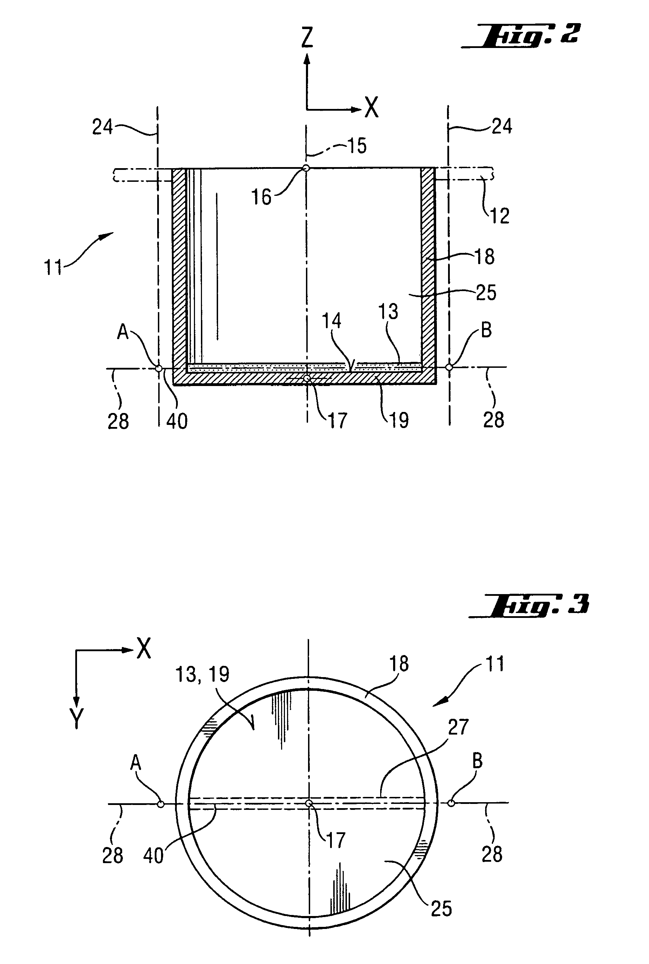

Fig. 2 shows a schematic cross-sectional view of sample container 11 of Fig. 1 taken along a plane parallel to the X-Z-plane and which passes through symmetry axis 15 (shown in Fig. 1) of sample container 11, and which is the plane in which X-ray beam 24 extends. As shown by Fig. 2, sample container 11 defines a chamber 25 which extends between the bottom wall 19 and the upper end of sample container 11. Chamber 25 is e.g. cylindrical and has a circular cross section.

Fig. 3 shows a schematic top view of sample container 11 in Fig. 1.

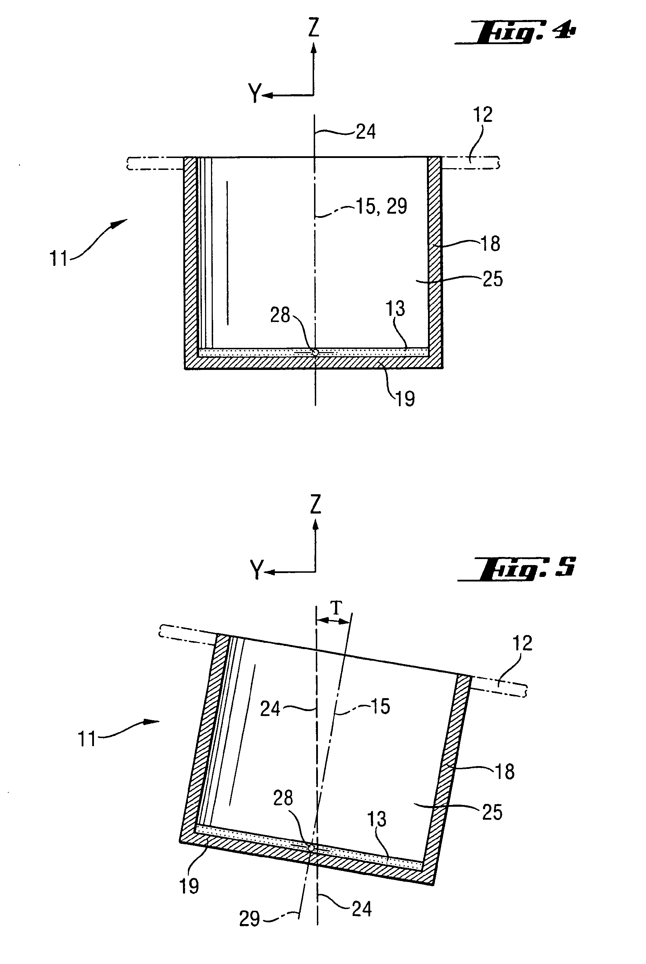

Fig. 4 shows a schematic cross-sectional view of sample container 11 of Fig. 1 taken along a plane parallel to the Y-Z-plane and which passes through symmetry axis 15 and which is perpendicular to the plane in which X-ray beam 24 extends. In this view sample container 11 is at an initial position with a tilting angle equal to zero.

Fig. 5 shows a schematic cross-sectional view of sample container 11 similar to the view shown in Figure 4, but in this view sample container 11 is in a tilted position with a tilting angle T between the symmetry axis 15 of sample container 11 and the plane in which X-ray beam 24 extends.

The first embodiment of a method according to the invention comprises the following steps:
(A1) a sample to be analyzed is placed on planar substrate 19 which is adapted for receiving and holding a sample and which is transparent to X-ray radiation,
(B1) a strip-shaped X-ray beam 24 is generated by means of an X-ray radiation source 21 (not shown in Figures 1 to 5). As shown by Figures 1, 2, 4 and 5, the central part of beam 24 extends along a plane,
(C1) the substrate 19 and thereby the sample placed thereon are positioned by suitable electro-mechanical means in the initial position shown by Fig. 4 in which that sample lies in the path of X-ray beam 24. When substrate 19 is in that initial position a slice 27 (shown by Fig. 3) of a volume element 13, which contains the sample, and thereby a slice of the sample itself is irradiated by beam 24,
(D1) the following movements of substrate 19 with respect to the above mentioned initial position thereof are effected:
   (D1.1) a rotation of substrate 19 and thereby of the sample around a rotation axis 29, and
   (D1.2) a tilting of substrate 19 and thereby of the sample around a tilting axis 28 and over a tilting angle T which varies between a first predetermined value and a second predetermined value, and
(E1) X-ray radiation transmitted through and diffracted by said sample is detected during a time interval over which the above mentioned movements of the substrate 19 are effected.

The above described method further comprises analyzing the detected radiation.

The method described above is advantageous, because by irradiating a sample slice with the X-ray beam more crystals contribute to diffraction and this improves the particle statistics as compared to a method wherein the sample is irradiated with an X-ray beam focused in a point. Moreover, by irradiating a sample slice with the X-ray beam the irradiated area is larger than when a point focused beam is used and this reduces the measuring time, because a time consuming scanning of the sample with a point focused beam is not required.

Substrate 19 is for instance a wall or a foil made e.g. of an X-Ray transparent plastic material, e.g. Kapton® (Du Pont) or Mylar® (Du Pont).

Substrate 19 is preferably also optically transparent, i.e. transparent to visible radiation.

Substrate 19 is the planar bottom wall 19 of sample container, e.g. of a sample container 11, which has e.g. a cylindrical side wall 18 and which has an upper opening.

The sample to be analyzed is placed in a volume element 13 which as shown in Fig. 1 is e.g. a thin layer located at the bottom of sample container 11 and on substrate 19. Volume element 13 is designated hereinafter also as sample layer 13. The sample preferably occupies a substantial part of or the entire volume of volume element 13.

The strip-shaped X-ray beam 24 illuminates a line segment 40 which coincides with tilting axis 28 and extends between points A and B shown in Figures 1, 2 and 3.

The length of line segment 40 is adjusted to be equal to or approximately equal to the inner diameter of the sample container.

As shown by Figures 1, 2 and 3 line segment 40 lies at the intersection of X-ray beam 24 with a plane which contains tilting axis 28. As shown by Fig. 3 the latter plane preferably passes through the center of sample layer 13.

Substrate 19 has an inner surface 14. The sample to be analyzed is placed on this surface of substrate 19.

As shown by Fig. 1, sample container 11 has a symmetry axis 15 which is perpendicular to substrate 19 and which passes through the center 17 of substrate 19 and through the center 16 of the upper opening of sample container 11.

As shown by Figures 1 and 4, in a preferred embodiment the central axis of beam 24 coincides with the symmetry axis 15 and with rotation axis 29 of sample container 11 when the tilting angle T is zero.

As shown by Fig. 5, the tilting angle T is the angle that rotation axis 29 forms with the plane through which the central part of beam 24 extends.

As shown by Figures 1 to 5, tilting axis 28 lies in the plane through which the central part of beam 24 extends and is perpendicular to rotation axis 29. As shown in particular by Figures 2, 4 and 5 tilting axis 28 passes preferably through the center of sample layer 13.

In a preferred embodiment the tilting of substrate 19 covers a tilting angle T that varies between a tilting angle zero defined by the initial position of substrate 19 and a predetermined value greater than zero, e.g. 10 degrees.

In a preferred embodiment the rotation and tilting movements of substrate 19 are performed simultaneously and continuously.

In another preferred embodiment the tilting movement of substrate 19 is performed stepwise and a rotation thereof covering a predetermined rotation angle is performed for each tilting step.

Substrate 19 is preferably a planar wall or foil.

In a preferred embodiment the central axis of beam 24 coincides with the symmetry axis 15 and with rotation axis 29 of sample container 11 when the tilting angle T is zero.

In another preferred embodiment the central axis of beam 24 and rotation axis 29 pass through the center 17 of planar substrate 19 when the latter is in the above-mentioned initial position.

In a preferred embodiment the radiation source 21 and thereby beam 24 are stationary and substrate 19 is moved with respect to beam 24.

In a preferred embodiment the rotation of substrate 19 covers an angle which is equal to or close to 360 degrees.

In another embodiment the rotation of substrate 19 covers an angle which is less than 360 degrees.

In another embodiment the rotation of substrate 19 covers an angle which is greater than 360 degrees.

### EXAMPLE 2: FIRST EMBODIMENT OF AN APPARATUS ACCORDING TO THE INVENTION

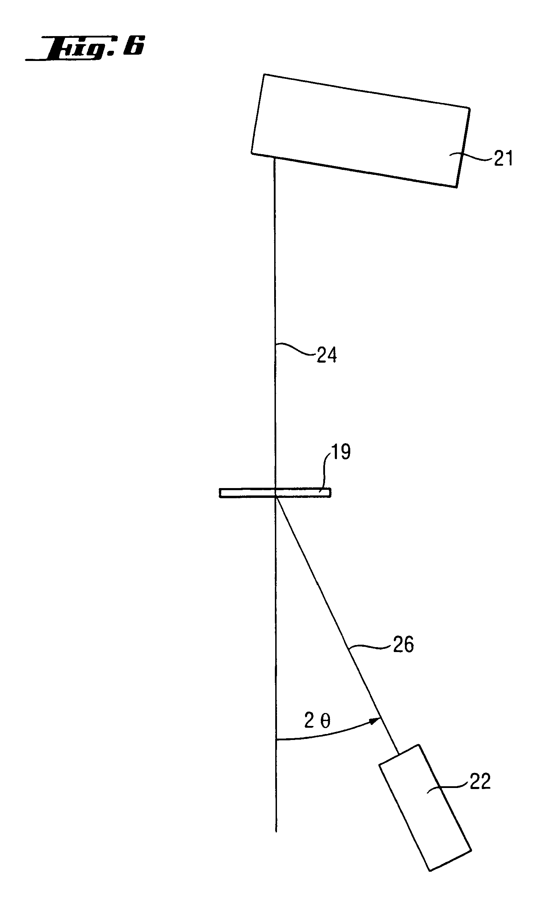

Fig. 6 shows a schematic cross-sectional view of the structure of a first embodiment of an apparatus for carrying out the above described method. The cross-section shown by Fig. 6 is taken along a plane parallel to the plane YZ in Fig. 1 and passing through the center of substrate element 19. The apparatus shown by Fig. 6 comprises an X-ray radiation source 21 that provides X-ray beam 24 for irradiating a sample placed on a substrate 19 and a detector 22 for detecting X-ray radiation 26 transmitted through and diffracted by the sample. Fig. 6 shows the diffraction angle 2 θ. θ is the Bragg angle.

The apparatus represented in Fig. 6 is a diffractometer and comprises an X-ray radiation source 21 which is adapted to provide a strip-shaped X-ray beam 24 the central part of which extends along a plane as shown in Figures 1, 2, 4 and 5,

The apparatus schematically represented in Fig. 6 further comprises electro-mechanical means (not shown in Fig. 6) for
- positioning substrate 19 and thereby the sample on that element in an initial position in which that sample lies in the path of beam 24 and a slice 27 (shown by Fig. 3) of a volume element 13, which contains the sample, and thereby a slice of the sample itself is irradiated by beam 24,
- effecting the following movements of the substrate 19 with respect to the above mentioned initial position:
   a rotation of substrate 19 and thereby of the sample around a rotation axis 29 which is perpendicular to the substrate, the rotation covering a predetermined rotation angle, and
   a tilting of substrate 19 and thereby of the sample around a tilting axis 28 which lies in the plane through which the central part of beam 24 extends and which is perpendicular to rotation axis 29, the tilting covering a tilting angle T that varies between a tilting angle zero defined by the initial position of substrate 19 and a predetermined value greater than zero, e.g. 10 degrees.

The apparatus schematically represented in Fig. 6 further comprises a detector 22 for detecting X-ray radiation transmitted through and diffracted by the sample during a time interval over which the above mentioned movements of the substrate 19 are effected.

As already described with reference to Figures 1-4, in the embodiment shown by Fig. 6 strip-shaped X-ray beam 24 illuminates a line segment 40 which coincides with tilting axis 28 and extends between points A and B shown in Figures 1, 2 and 3.

The length of line segment 40 is adjusted to be equal to or approximately equal to the inner diameter of the sample container.

Substrate 19 is e.g. as described above with reference to Figures 1 to 5.

Substrate 19 is the planar bottom wall 19 of a sample container 11, which has e.g. a cylindrical side wall 18 and which has an upper opening.

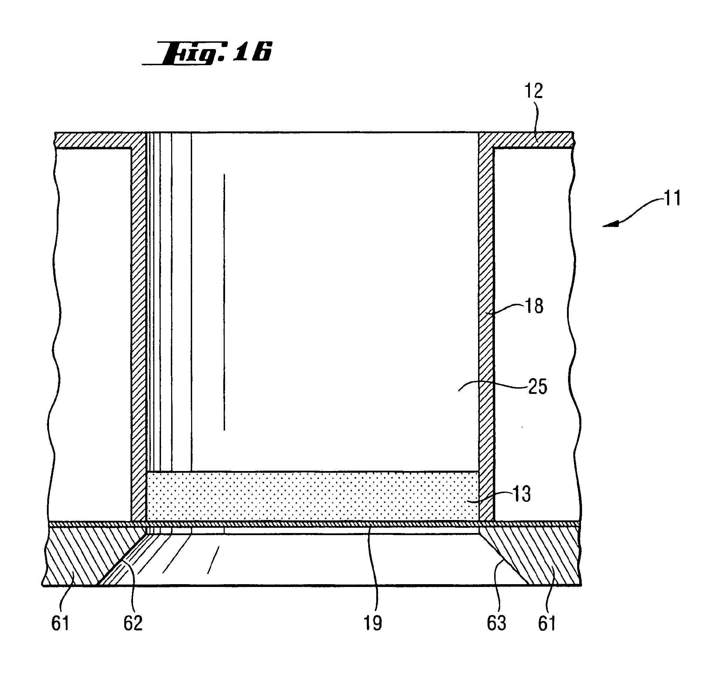

Fig. 16 shows a schematic cross-sectional view of an embodiment of a sample container 11 wherein a foil 19 is the bottom wall of the sample container. The cross-section shown by Fig. 16 is taken along a plane parallel to the plane XZ in Fig. 1 and passing through the center of substrate element 19.

As shown in the embodiment of sample container 11 represented in Fig. 16, the bottom wall of sample container 11, and therefore the substrate on which sample layer 13 is deposited, is preferably a foil 19, e.g. a Kapton® foil, which closes the lower opening of a container 11 of the type shown in Figures 1-5 and which is transparent to X-ray radiation. In the embodiment shown in Fig. 16, a mounting plate 61 is used to fix foil 19 on the lower end of sample container 11. For this purpose, sample container 11, foil 19 and mounting plate 61 are assembled together as shown by Fig. 16. Mounting plate 61 has e.g. a circular opening which is aligned with the cross section of chamber 25 of sample container 11 and thereby allows passage of a beam diffracted by a sample deposited on foil 19 in chamber 25. As shown by Fig. 16, the circular opening has edges 62, 63 each of which forms an angle of e.g. about 45 degrees with the plane where foil 19 lies. This shape of edges 62, 63 allows an enhancement of the region through which the diffracted beam passes.

When substrate 19 is in the above-mentioned initial position, the central axis of beam 24 and rotation axis 29 pass through the center 17 of substrate 19.

In a preferred embodiment detector 22 is a movable detector.

In another preferred embodiment detector 22 is a stationary detector which lies in a portion of a spherical surface.

In a preferred embodiment of the above-described apparatus, the means for moving sample substrate 19 are adapted for effecting a rotation of substrate 19 covering an angle which is equal to or close to 360 degrees.

In another embodiment the rotation of substrate 19 covers an angle which is less than 360 degrees.

In another embodiment the rotation of substrate 19 covers an angle which is greater than 360 degrees.

### EXAMPLE 3: SECOND EMBODIMENT OF AN APPARATUS ACCORDING TO THE INVENTION

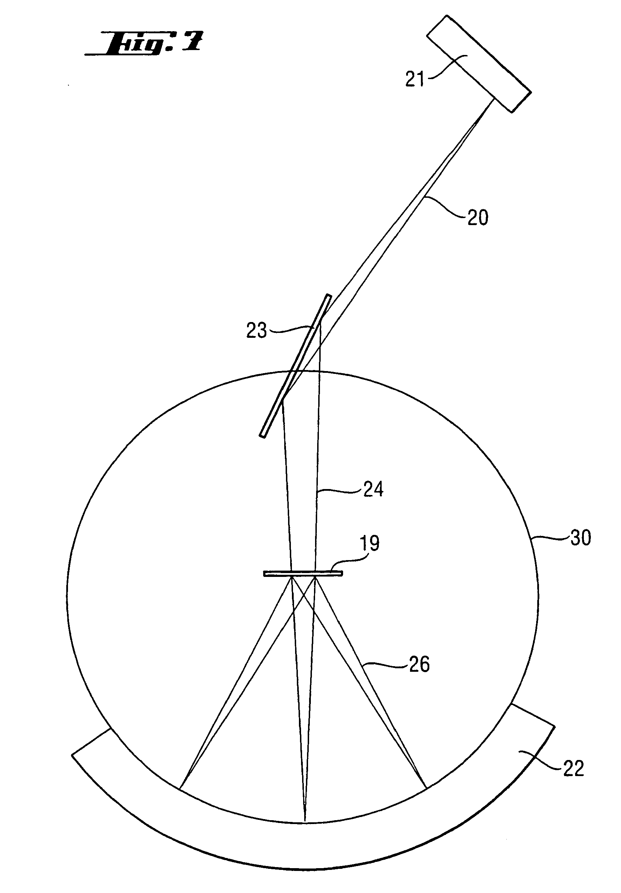

Fig. 7 shows a schematic cross-sectional view of the structure of a second embodiment of an apparatus for carrying out the above described method. The cross-section shown by Fig. 7 is taken along a plane parallel to the plane YZ in Fig. 1 and passing through the center of substrate element 19. The apparatus shown by Fig. 7 is a diffractometer and comprises basically the components of the apparatus described above with reference to Fig. 6 and in addition comprises means for focusing X-ray beam 24, e.g. a Germanium (111) monochromator 23 located in the path of beam 24 and between X-ray source 21 and substrate 19 which holds the sample to be analyzed. In this embodiment detector 22 is a stationary detector which lies in a portion of a spherical surface 30.

### EXAMPLE 4: THIRD EMBODIMENT OF AN APPARATUS ACCORDING TO THE INVENTION

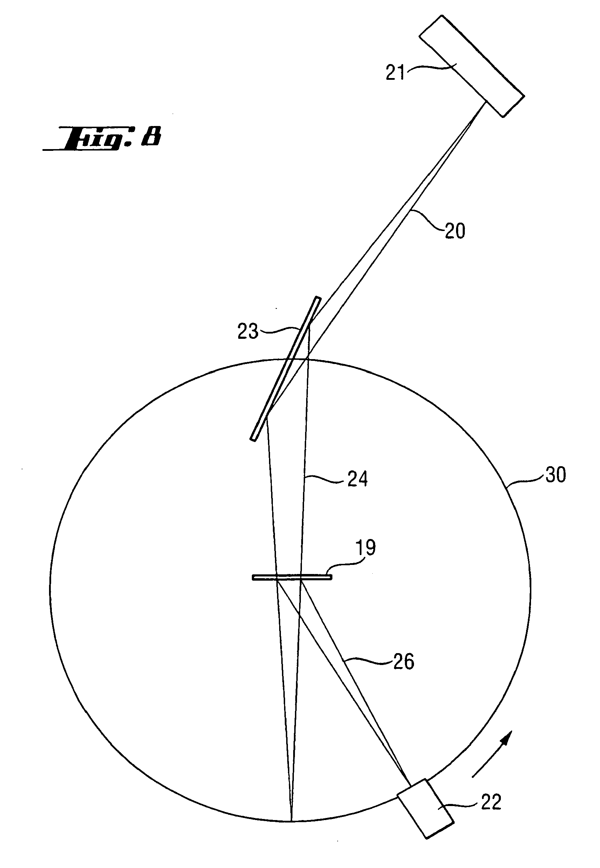

Fig. 8 shows a schematic cross-sectional view of the structure of a third embodiment of an apparatus for carrying out the above described method. The cross-section shown by Fig. 8 is taken along a plane parallel to the plane YZ in Fig. 1 and passing through the center of substrate element 19. The apparatus shown by Fig. 8 comprises the components of the diffractometer described above with reference to Fig. 7 with exception of the detector. In the embodiment shown by Fig. 8, the detector comprises at least one movable detector 22.

### EXAMPLE 5: FOURTH EMBODIMENT OF AN APPARATUS ACCORDING TO THE INVENTION

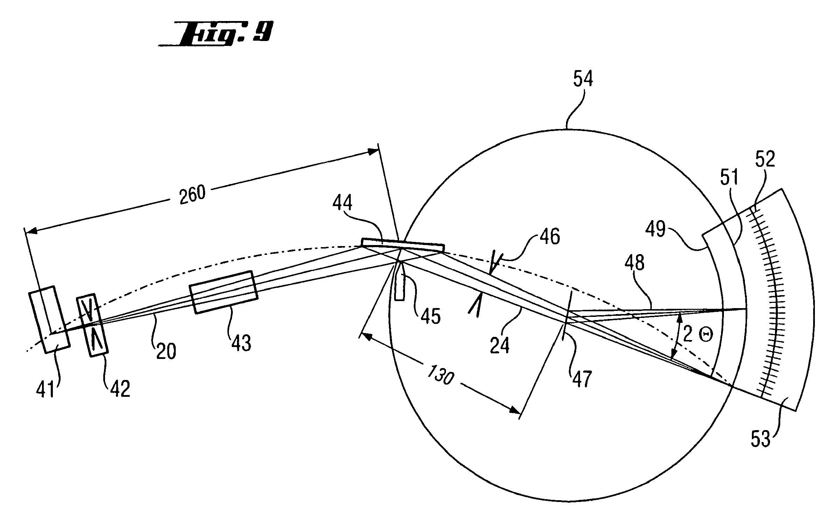

Fig. 9 shows a schematic cross-sectional view of the structure of a fourth embodiment of an apparatus for carrying out the above described method. The cross-section shown by Fig. 9 is taken along a plane parallel to the plane YZ in Fig. 1 and passing through the center of substrate element 19. The apparatus shown by Fig. 9 has basically the structure of the apparatus described above with reference to Fig. 7.

A diffractometer according to this fourth embodiment comprises the following components arranged as shown in Fig. 9:
an X-Ray tube 41,
a curved Germanium (111) monocromator 44 mounted on the circumference 54 of the diffractometer,
a position sensitive detector 53,
a shutter 42,
a Soller slit 43,
slits 45 and 46,
a substrate 47 that holds a sample, and
a Beryllium window 49.

Monocromator 44 receives a primary X-ray beam 20 provided by X-ray tube 41 and supplies a convergent monochromatic Kα₁ X-ray beam 24 which is focused in 2θ at the point O. With the arrangement shown in Fig. 9 diffracted beams 48 diffracted by a sample placed on substrate 47 are focused on a circle 54 of radius r = 130 millimeter within a range 2θ of about 40 degrees. This is advantageous for the use of a stationary curved position sensitive detector (PSD) 53. Detector 53 comprises a delay line 52. The anode wire 51 of position sensitive detector 53 lies on a circle segment which coincides with a segment of the focusing circle 54 and the diffracted beams 48 always enter perpendicular to the counter surface in contrast to conventional Guinier or Seemann-Bohlin techniques.

The apparatus shown by Fig. 9 comprises electro-mechanical means for positioning and moving sample holding substrate 47. The latter means are as described above for the embodiment described with reference to Fig. 6.

### EXAMPLE 6: SECOND EMBODIMENT OF A METHOD ACCORDING TO THE INVENTION

A second embodiment of a method according to the invention for transmission mode X-ray diffraction analysis is described hereinafter with reference to Figures 1 to 5 and 10. This method serves for transmission mode X-ray diffraction analysis of a plurality of samples by means of an apparatus comprising an X-ray radiation source 21 and a detector 22 for detecting X-ray radiation transmitted through and diffracted by the sample.

Strip shaped X-ray beam 24, sample layer 13, line segment 40 and tilting axis 28 are as described above with reference to Figures 1-5.

Fig. 10 shows a schematic perspective view of an apparatus for performing this second embodiment of a method according to the invention.

The second embodiment of a method according to the invention comprises the following steps:
(A2) a plurality of samples to be analyzed are placed on respective planar substrate elements 19 of a multiple-sample holder 12. Each of substrate elements 19 is adapted for receiving and holding a sample and is transparent to X-ray radiation,
(B2) a strip-shaped X-ray beam 24 is generated by means of an X-Ray radiation source 21 (shown in Fig. 10). As shown by Figures 1, 2, 4 and 5, the central part of beam 24 extends along a plane,
(C2) a multiple-sample holder 12 is placed in an apparatus comprising means for moving and positioning multiple-sample holder 12 so that a pre-selected substrate element 19 can be positioned in the path of beam 24. When the pre-selected substrate element 19 is in that initial position a slice 27 (shown by Fig. 3) of a volume element 13, which contains the sample, and thereby a slice of the sample itself is irradiated by beam 24,
(D2) a pre-selected substrate element 19 of said multiple-sample holder 12 is positioned in an initial position in which said sample lies in the path of said beam 24 and a slice 27 of said sample is irradiated by said beam 24,
(E2) the following movements of said pre-selected substrate element 19 with respect to the above mentioned initial position thereof are effected:
   (E2.1) a rotation of the pre-selected substrate element 19 and thereby of the sample around a rotation axis 29, and
   (E2.2) a tilting of the pre-selected substrate element 19 and thereby of the sample around a tilting axis 28 and over a tilting angle T which varies between a first predetermined value and a second predetermined value, and
(F2) X-ray radiation transmitted through and diffracted by said sample is detected during a time interval over which the above mentioned movements of the pre-selected substrate 19 are effected.

The above described method further comprises analyzing the detected radiation.

The positioning of the pre-selected substrate element 19 described above under (D2) is effected by suitable translation and/or rotation movements of multiple-sample holder 12 that bring that substrate element to the above-mentioned initial position.

The movements described above under (E2.1) and (E2.2) are effected by corresponding movements of multiple-sample holder 12.

Substrate element 19 is for instance a wall or a foil made e.g. of an X-Ray transparent plastic material, e.g. Kapton^{®} (Du Pont) or Mylar^{®} (Du Pont).

Substrate element 19 is preferably also optically transparent, i.e. transparent to visible radiation.

As shown by Figures 2, 4 and 5 substrate element 19 is the planar bottom wall of a sample container 11, which has e.g. a cylindrical side wall 18 and which has an upper opening.

The sample to be analyzed is placed in a volume element 13 which as shown in Fig. 1 is e.g. a thin layer located at the bottom of sample container 11 and on substrate element 19. Volume element 13 is designated hereinafter also as sample layer 13. The sample can but does not necessarily have to occupy the entire volume of volume element 13.

As shown by Fig. 1, sample container 11 has a symmetry axis 15 which is perpendicular to substrate element 19 and which passes through the center 17 of substrate element 19 and through the center 16 of the upper opening of sample container 11.

As shown by Figures 1, 4 and 5, in a preferred embodiment rotation axis 29 coincides with the symmetry axis 15 of sample container 11.

As shown by Fig. 5, the tilting angle T is the angle that rotation axis 29 forms with the plane through which the central part of beam 24 extends.

As shown by Figures 1 to 5, tilting axis 28 lies in the plane through which the central part of beam 24 extends and is perpendicular to rotation axis 29. As shown in particular by Figures 2, 4 and 5 tilting axis 28 passes preferably through the center of sample layer 13.

In a preferred embodiment the tilting of substrate element 19 covers a tilting angle T that varies between a tilting angle zero defined by the initial position of substrate 19 and a predetermined value greater than zero, e.g. 10 degrees.

In a preferred embodiment the rotation and tilting movements of substrate element 19 are performed simultaneously and continuously.

In another preferred embodiment the tilting movement of substrate element 19 is performed stepwise and a rotation thereof covering a predetermined rotation angle is performed for each tilting step.

Substrate element 19 is preferably a planar wall or foil.

In a preferred embodiment the rotation axis 29 coincides with the symmetry axis 15 of sample container 11.

In another preferred embodiment the central axis of beam 24 and rotation axis 29 pass through the center 17 of planar substrate element 19 when the latter is in the above-mentioned initial position.

In a preferred embodiment the radiation source 21 and thereby beam 24 are stationary and substrate element 19 is moved with respect to beam 24.

In a preferred embodiment the rotation of substrate 19 covers an angle which is equal to or close to 360 degrees.

In another embodiment the rotation of substrate 19 covers an angle which is less than 360 degrees.

In another embodiment the rotation of substrate 19 covers an angle which is greater than 360 degrees.

### EXAMPLE 7: FOURTH EMBODIMENT OF AN APPARATUS ACCORDING TO THE INVENTION

Fig. 10 shows a schematic perspective view of an apparatus according to the invention for performing transmission mode X-ray diffraction analysis of a plurality of samples. This apparatus comprises an X-ray radiation source 21 that provides X-ray beam 24 for irradiating a sample and a detector 22 for detecting X-ray radiation 26 transmitted through and diffracted by the sample.

The apparatus shown by Fig. 10 comprises:
an X-ray radiation source 21 which is adapted to provide a strip-shaped X-ray beam 24 the central part of which extends along a plane as shown in Figures 1, 2, 4 and 5,
a multiple-sample holder 12 which comprises a plurality of substrate elements 19 each of which is adapted for receiving and holding a sample to be analyzed. Each of said substrate elements 19 is transparent to X-ray radiation,
electromechanical-means for
positioning a pre-selected substrate element of multiple-sample holder 12 and thereby a sample placed on that element in an initial position in which the sample lies in the path of said beam 24 and a slice 27 (shown by Fig. 3) of a volume element 13, which contains the sample, and thereby a slice of the sample itself is irradiated by beam 24, and
effecting the following movements of the pre-selected substrate element 19 with respect to the above mentioned initial position thereof:
   - a rotation of the pre-selected substrate element 19 and thereby of the sample around a rotation axis 29 which is perpendicular to the pre-selected substrate element, said rotation covering a predetermined rotation angle, and
   - a tilting of the pre-selected substrate element 19 and thereby of the sample around a tilting axis 28 which lies in the plane through which the central part of beam 24 extends and which is perpendicular to rotation axis 29, said tilting covering a tilting angle T that varies between a tilting angle zero defined by said initial position of said substrate element 19 and a predetermined value greater than zero, and
a detector 22 for detecting X-ray radiation transmitted through and diffracted by the sample during a time interval over which the above mentioned movements of the substrate element 19 are effected.

The above mentioned electromechanical-means comprise e.g. a table 31 for rotating and tilting multiple-sample holder 12 for effecting the above-mentioned movements. As shown by Fig. 10, table 31 comprises a movable support frame 71 which is adapted for receiving and holding multiple-sample holder 12, a guide rail 72 oriented in X-direction, a guide rail 73 oriented in γ-direction, and motors for moving support frame 71 on table 31 along guide rails 72 and 73 respectively. The apparatus shown in Fig. 10 further comprises means for rotating table 31 about rotation axis 29 which is perpendicular to the table 31. These means include motor and mechanical transmission means which are not shown in detail in Fig. 10. The apparatus shown in Fig. 10 further comprises tilting means for tilting table 31 about tilting axis 28. These tilting means comprise a support frame 81 which carries table 31 and the associated means for rotating table 31 around the rotating axis. As schematically shown in Fig. 10, support frame 81 is rotatably mounted on supports 82 and 83, and a motor 84 and mechanical transmission elements 85 and 86 allow to rotatate support frame 81 about axis 29 of a desired angle and thereby to modify the tilting angle of table 31.

If the method according to the invention is not performed on a plurality of samples on a multiple-sample holder 12, but on a sample contained in a single sample container 11, the apparatus required for positioning, rotating and tilting the single sample container is much smaller than the one described above and comprises a sample container holder instead of table 31 and electro-mechanical means for positioning, rotating and tilting the sample holder.

Multiple-sample holder 12 comprises e.g. a matrix array of holes adapted for receiving respective sample containers 11 having the above described structure.

Substrate element 19 is as described above with reference to Figures 1 to 5.

Substrate element 19 is preferably a planar wall or foil.

Substrate element 19 is the planar bottom wall 19 of a sample container 11, which has e.g. a cylindrical side wall 18 and which has an upper opening.

As already described with reference to Figures 1-4, in the embodiment shown by Fig. 10 strip-shaped X-ray beam 24 illuminates a line segment 40 which coincides with tilting axis 28 and extends between points A and B shown in Figures 1, 2 and 3.

The length of line segment 40 is adjusted to be equal to or approximately equal to the inner diameter of the sample container.

When substrate element 19 is in the above-mentioned initial position, the central axis of beam 24 and rotation axis 29 pass through the center 17 of substrate element 19.

In a preferred embodiment detector 22 is a movable detector.

In another preferred embodiment detector 22 is a stationary detector which lies in a portion of a spherical surface.

In a preferred embodiment of the above-described apparatus, the means for moving sample substrate element 19 are adapted for effecting a rotation of substrate element 19 covering an angle which is equal to or close to 360 degrees.

In another embodiment the rotation of substrate element 19 covers an angle which is less than 360 degrees.

In another embodiment the rotation of substrate element 19 covers an angle which is greater than 360 degrees.

In a preferred embodiment shown in Fig. 10 the apparatus further comprises means for focusing X-ray beam 24, e.g. a Germanium (111) monochromator 23 located in the path of beam 24 and between X-ray source 21 and pre-selected substrate element 19 which holds the sample to be analyzed.

In a preferred embodiment the radiation source 21 and thereby beam 24 are stationary and pre-selected substrate element 19 is moved with respect to beam 24.

### MEASUREMENT RESULTS SHOWING THE IMPROVEMENT OBTAINED WITH METHOD AND APPARATUS ACCORDING TO THE INVENTION

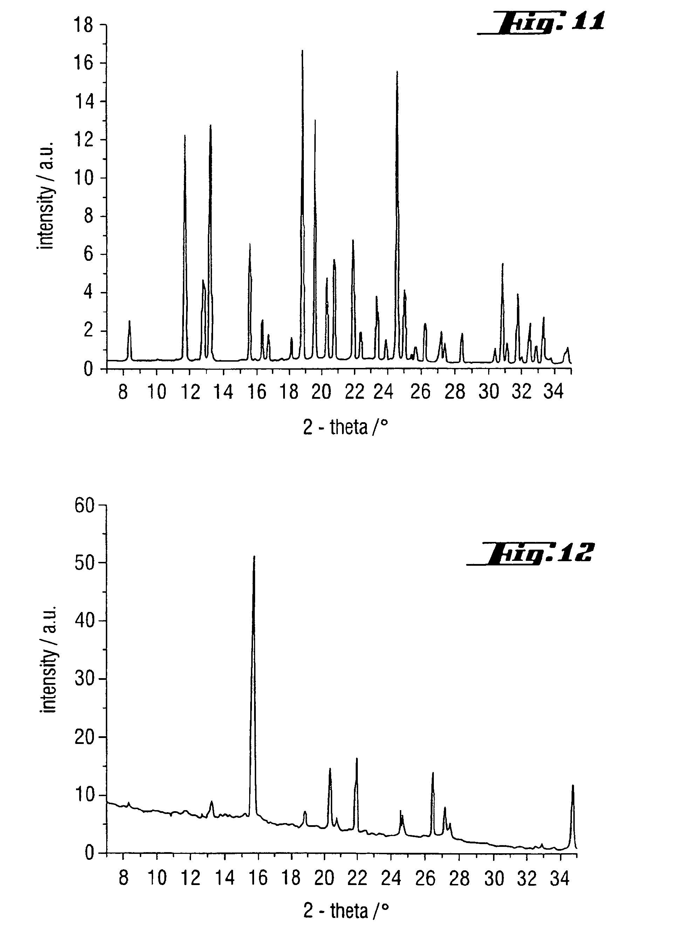

The improvement obtained with the methods and apparatuses according to the invention can be appreciated from the X-ray-diffractograms shown by Figures 11 to 15. These are diffractograms obtained for one of the same compound under different measurement conditions. In Figures 11-15 the vertical axis shows a parameter corresponding to the intensity of the diffracted beam in arbitrary units (abbreviated a.u.).

As basis for evaluating the improvement of the measuring results with the methods and apparatus according to the invention, the reference diffractogram shown by Fig. 11 was obtained by measuring a sample in powder form contained in a capillary tube. The diffractograms shown by Figures 12 to 15 were obtained for one and the same sample of the compound having the diffractogram shown by Figure 11.

Figure 11 shows an X-ray diffraction pattern which serves as reference for evaluating the quality of diffraction patterns obtained with different methods.

Fig. 12 shows an X-ray diffraction pattern obtained with a stationary sample. Compared with the diffractogram of Fig. 11, the diffractogram of Fig. 12 has much less diffracted peaks of radiation and some of these peaks have intensities which are disproportionately strong.

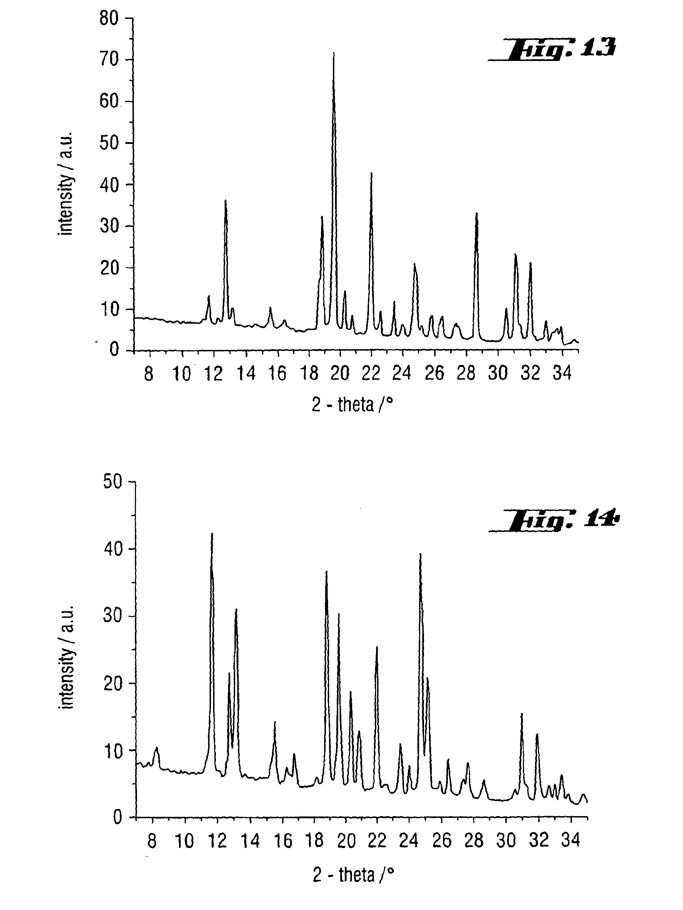

Fig. 13 shows an X-ray diffraction pattern obtained with a sample that is rotated 360 degrees during the detection of the radiation diffracted by a sample, but that is not tilted. Compared with the diffractogram of Fig. 12, the diffractogram of Fig. 13 has substantially more diffracted peaks of radiation, but not as many as the reference diffractogram of Fig. 11, and the intensity relationship of the peaks in Fig. 13 differ from the intensity relationship of the peaks in the reference diffractogram of Fig. 11.

Fig. 14 shows an X-ray diffraction pattern obtained - according to the invention - with a sample that is tilted over a certain tilting angle and rotated 360 degrees during the detection of the radiation diffracted by a sample. The diffracted peaks of radiation of this diffractogram correspond closely to those of the peaks of the reference diffractogram of Fig. 11.

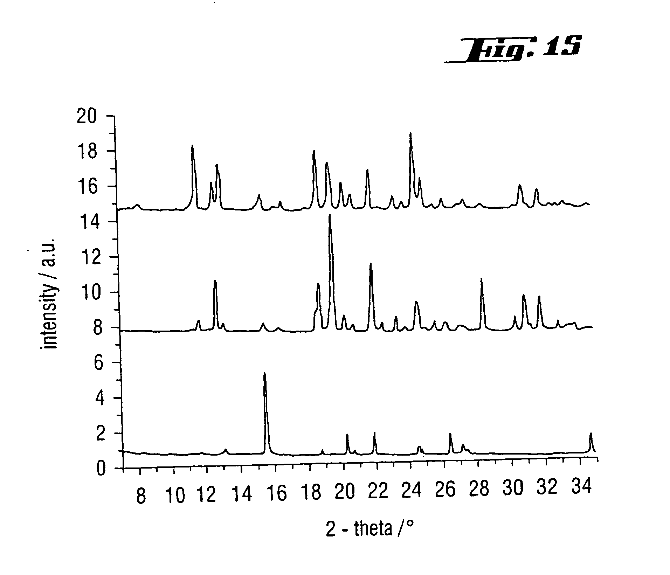

Fig. 15 shows for the purpose of comparison 3 X-ray diffraction patterns obtained under the following conditions:
the lower diffraction pattern in Fig. 15 is obtained with a stationary sample as for the obtention of the diffractogram of Fig. 12,
the diffraction pattern in the center of Fig. 15 is obtained when the sample is only rotated but not tilted during the measurement, as for the obtention of the diffractogram of Fig. 13,
the upper diffraction pattern in Fig. 15 is obtained with a sample that is rotated and tilted during the measurement, as for the obtention of the diffractogram of Fig. 14.

Although a preferred embodiments of the invention have been described using specific terms, such description is for illustrative purposes only, and it is to be understood that changes and variations may be made without departing from the scope of the following claims.

## Claims

1. A method for transmission mode X-ray diffraction analysis of a sample by means of an apparatus comprising an X-ray radiation source (21) that provides X-ray radiation for irradiating said sample and a detector (22) for detecting X-ray radiation transmitted through and diffracted by said sample, said method comprising
(a) placing a sample to be analyzed on a substrate (19) which is adapted for receiving and holding said sample, said substrate forming the planar bottom wall of a sample container (11) having an inner diameter and being transparent to X-ray radiation,
(b) generating by means of an X-ray radiation source (21) a strip shaped X-ray beam (24) that irradiates a strip-shaped region, the central part of said beam extending along a plane,
(c) positioning said substrate and thereby said sample in an initial position in which said sample lies in the path of said beam (24) and in which a slice (27) of said sample is irradiated by said beam (24),
(d) effecting the following movements of the substrate (19) with respect to the above mentioned initial position thereof:
(d.1) a rotation of said substrate (19) and thereby of said sample around a rotation axis (29) which is perpendicular to said substrate, said rotation covering a predetermined rotation angle, and
(d.2) a tilting of said substrate (19) and thereby of said sample around a tilting axis (28) and over a tilting angle (T) defined as the angle that said rotation axis (29) forms with said plane through which the central part of said beam (24) extends, said tilting axis lying in said plane through which the central part of said beam (24) extends and being perpendicular to said rotation axis (29), said tilting covering a tilting angle (T) that varies between a first predetermined value and a second predetermined value,
wherein said X-ray beam (24) illuminates a line segment (4) which lies substantially in said tilting axis (28), the length of said line segment being adjusted to be equal to or approximately equal to the inner diameter of the sample container (11), and
(e) detecting with said detector (22) X-ray radiation transmitted through and diffracted by said sample during a time interval over which the above mentioned movements of the substrate (19) are effected.

2. A method according to claim 1, wherein said rotation and tilting movements of said substrate (19) are performed simultaneously and continuously.

3. A method according to claim 1, wherein said tilting movement of said substrate (19) is performed stepwise and a rotation thereof covering a predetermined rotation angle is performed for each tilting step.

4. A method according to any one of claims 1 to 3, wherein the central axis of said beam (24) and said rotation axis (29) pass through the center (17) of said planar substrate (19) when the latter is in said initial position.

5. A method according to any one of claims 1 to 4, wherein said radiation source (21) is stationary.

6. A method according to any one of claims 1 to 5, wherein said rotation of substrate (19) covers an angle which is equal to or close to 360 degrees.

7. A method according to any one of claims 1 to 5, wherein said rotation of substrate (19) covers an angle which is less than 360 degrees.

8. A method according to any one of claims 1 to 5, wherein said rotation of substrate (19) covers an angle which is greater than 360 degrees.

9. An apparatus for transmission mode X-ray diffraction analysis of a sample, said apparatus including an X-ray radiation source (21) that provides X-ray radiation for irradiating said sample and a detector (22) for detecting X-ray radiation transmitted through and diffracted by said sample, said apparatus comprising
(a) an X-ray radiation source (21) which is adapted to provide a strip-shaped X-ray beam (24) that irradiates a strip shaped region, the central part of said beam extending along a plane,
(b) a substrate (19) which is adapted for receiving and holding a sample to be analyzed, said substrate forming the planar bottom wall of a sample container (11) having an inner diameter and being transparent to X-ray radiation,
(c) means for positioning said substrate (19) and thereby said sample in an initial position in which said sample lies in the path of said beam (24) and in which a slice (27) of said sample is irradiated by said beam (24),
(d) means for effecting the following movements of the substrate (19) with respect to the above mentioned initial position:
(d.1) a rotation of said substrate (19) and thereby of said sample around a rotation axis (29) which is perpendicular to said substrate, said rotation covering a predetermined rotation angle, and
(d.2) a tilting of said substrate (19) and thereby of said sample around a tilting axis (28) which lies in said plane through which the central part of said beam (24) extends and which is perpendicular to said rotation axis (29), said tilting covering a tilting angle (T) that varies between a tilting angle zero defined by said initial position of said substrate (19) and a predetermined value greater than zero,
(e) focusing means located in the path of said X-ray beam (24) and between said X-ray radiation source (21) and said sample substrate (19),
wherein said focusing means focus said X-ray beam (24) in a line segment (4) which substantially lies in said tilting axis (28), the length of said line segment being adjusted to be equal to or approximately equal to the inner diameter of the sample container (11), and
(f) a detector (22) for detecting X-ray radiation transmitted through and diffracted by said sample during a time interval over which the above mentioned movements of the substrate (19) are effected.

10. An apparatus according to claim 9, wherein the central axis of said beam (24) and said rotation axis (29) pass through the center (17) of said planar substrate (19) when the latter is in said initial position.

11. An apparatus according to any one of claims 9 or 10, wherein said detector (22) is a movable detector.

12. An apparatus according to any one of claims 9 or 10, wherein said detector (22) is a stationary detector which lies in a portion of a spherical surface.

13. An apparatus according to any one of claims 9 to 12, wherein said radiation source (21) is stationary.

14. An apparatus according to any one of claims 9 to 13, wherein said rotation covers an angle which is equal to or close to 360 degrees.

15. An apparatus according to any one of claims 9 to 13, wherein said rotation covers an angle which is less than 360 degrees.

16. An apparatus according to any one of claims 9 to 13, wherein said rotation covers an angle which is greater than 360 degrees.

17. Method for transmission mode X-ray diffraction analysis of a plurality of samples by means of an apparatus comprising an X-ray radiation source (21) and a detector (22) for detecting X-ray radiation transmitted through and diffracted by said sample, said method comprising
(a) placing a plurality of samples to be analyzed on respective substrate elements (19) of a sample holder (12), the respective substrate elements (19) being planar substrate elements, with each substrate element forming the bottom of a respective sample container (11) having an inner diameter and being transparent to X-ray radiation,
(b) generating by means of an X-ray radiation source (21) a strip-shaped X-ray beam (24) that irradiates a strip shaped region, the central part of said beam extending along a plane,
(c) placing said sample holder (12) in an apparatus comprising means for moving and positioning said sample holder so that a pre-selected sample can be positioned in the path of said beam (24),
(d) positioning a pre-selected substrate element (19) of said sample holder (12) and thereby the sample on that substrate element in an initial position in which said sample lies in the path of said beam (24) and in which a slice (27) of said sample is irradiated by said beam (24),
(e) effecting the following movements of said pre-selected substrate element (19) with respect to the above mentioned initial position:
(e.1) a rotation of said pre-selected substrate element (19) and thereby of said sample around a rotation axis (29) which is perpendicular to said substrate element, said rotation covering a predetermined rotation angle, and
(e.2) a tilting of said pre-selected substrate element (19) and thereby of said sample around a tilting axis (28) and over a tilting angle (T) defined as the angle that said rotation axis (29) forms with said plane through which the central part of said beam (24) extends, said tilting axis lying in said plane through which the central part of said beam (24) extends and being perpendicular to said rotation axis (29), said tilting covering a tilting angle (T) that varies between a first predetermined value and a second predetermined value,
wherein said X-ray beam (24) illuminates a line segment (4) which lies substantially in said tilting axis (28), the length of said line segment being adjusted to be equal to or approximately equal to the inner diameter of the sample container, and
(f) detecting with said detector (22) X-ray radiation transmitted through and diffracted by said sample during a time interval over which the above mentioned movements of the pre-selected substrate element (19) are effected.

18. A method according to claim 17, wherein said rotation and tilting movements of said substrate element (19) are performed simultaneously and continuously.

19. A method according to claim 17, wherein said tilting movement of said substrate element (19) is performed stepwise and a rotation thereof covering a predetermined rotation angle is performed for each tilting step.

20. A method according to any one of claims 17 to 19, wherein the central axis of said beam (24) and said rotation axis (29) pass through the center (17) of said planar substrate element (19) when the latter is in said initial position.

21. A method according to any one of claims 17 to 20, wherein said radiation source (21) is stationary.

22. A method according to any one of claims 17 to 21, wherein said rotation of substrate element (19) covers an angle which is equal to or close to 360 degrees.

23. A method according to any one of claims 17 to 21, wherein said rotation of substrate element (19) covers an angle which is less than 360 degrees.

24. A method according to any one of claims 17 to 21, wherein said rotation of substrate element (19) covers an angle which is greater than 360 degrees.

25. A method according to claim 17, further comprising repeating steps (e) and (f) for each one of the plurality of samples in the sample holder.

26. Apparatus for transmission mode X-ray diffraction analysis of a plurality of samples by means of an apparatus comprising an X-ray radiation source (21) and a detector (22) for detecting X-ray radiation transmitted through and diffracted by a sample, said apparatus comprising
(a) an X-ray radiation source (21) which is adapted to provide a strip-shaped X-ray beam (24) that irradiates a strip shaped region, the central part of said beam extending along a plane,
(b) a sample holder (12) comprising a plurality of substrate elements (19) each of which is adapted for receiving and holding a sample to be analyzed, each of said substrate elements forming the planar bottom wall of a respective sample container (11) having an inner diameter and being transparent to X-ray radiation,
(c) means for positioning a pre-selected substrate element and thereby a sample placed on that element in an initial position in which said sample lies in the path of said beam (24) and in which a slice (27) of said sample is irradiated by said beam (24),
(d) means for effecting the following movements of said pre-selected substrate element (19) with respect to the above mentioned initial position thereof:
(d.1) a rotation of said pre-selected substrate element (19) and thereby of said sample around a rotation axis (29) which is perpendicular to said substrate element, said rotation covering a predetermined rotation angle, and
(d.2) a tilting of said pre-selected substrate element (19) and thereby of said sample around a tilting axis (28) which lies in said plane through which the central part of said beam (24) extends and which is perpendicular to said rotation axis (29), said tilting covering a tilting angle (T) that varies between a tilting angle zero defined by said initial position of said substrate element (19) and a predetermined value greater than zero,
(e) focusing means located in the path of said X-ray beam (24) and between said X-ray radiation source (21) and said sample substrate (19),
wherein said focusing means focus said X-ray beam (24) in a line segment (4) which substantially lies in said tilting axis (28), the length of said line segment being adjusted to be equal to or approximately equal to the inner diameter of the sample container (11), and
(f) a detector (22) for detecting X-ray radiation transmitted through and diffracted by said sample during a time interval over which the above mentioned movements of the substrate element (19) are effected.

27. An apparatus according to claim 26, wherein the central axis of said beam (24) and said rotation axis pass (29) through the center (17) of said planar substrate element (19) when the latter is in said initial position.

28. An apparatus according to any one of claims 26 or 27, wherein said detector (22) is a movable detector.

29. An apparatus according to any one of claims 26 or 27, wherein said detector (22) is a stationary detector which lies in a portion of a spherical surface.

30. An apparatus according to any one of claims 26 to 29, wherein said radiation source (21) is stationary.

31. An apparatus according to any one of claims 26 to 30, wherein said rotation covers an angle which is equal to or close to 360 degrees.

32. An apparatus according to any one of claims 26 to 30, wherein said rotation covers an angle which is less than 360 degrees.

33. An apparatus according to any one of claims 26 to 30, wherein said rotation covers an angle which is greater than 360 degrees.

## Patentansprüche

1. Verfahren zur Durchlicht-Röntgenbeugungsanalyse einer Probe mittels einer Vorrichtung umfassend eine Röntgenstrahlungsquelle (21), die Röntgenstrahlung zur Bestrahlung der Probe bereitstellt, und einen Detektor (22) zum Detektieren von durch die Probe hindurchgetretener und gebeugter Röntgenstrahlung, wobei das Verfahren umfasst
(a) Platzieren einer zu analysierenden Probe auf einem Träger (19), welcher zum Aufnehmen und Halten der Probe angepasst ist, wobei der Träger die planare Bodenfläche eines Probenbehälters (11) bildet, der einen inneren Durchmesser aufweist und für Röntgenstrahlung durchlässig ist,
(b) Mittels einer Röntgenstrahlungsquelle (21) Erzeugen eines streifenförmigen Röntgenstrahlenbündels (24), welches einen streifenförmigen Bereich beleuchtet, wobei sich der zentrale Teil des Strahlenbündels entlang einer Ebene erstreckt,
(c) Positionieren des Träger und damit der Probe in einer Ausgangsposition, in welcher die Probe im Strahlengang des Strahlenbündels (24) liegt und in welcher eine Scheibe (27) der Probe von diesem Strahlenbündel (24) beleuchtet wird,
(d) Ausführen der folgenden Bewegungen des Trägers (19) bezüglich dessen oben genannter Ausgangsposition:
(d.1) eine Drehung des Trägers (19) und damit der Probe um eine Drehachse (29), die senkrecht zum Träger verläuft, wobei die Drehung einen vorbestimmten Drehwinkel abdeckt, und
(d.2) ein Kippen des Trägers (19) und damit der Probe um eine Kippachse (28) und mit einem Kippwinkel (T), der als Winkel definiert ist, welchen die Drehachse (29) mit der Ebene bildet in der sich der zentrale Teil des Strahlenbündels (24) erstreckt, wobei die Kippachse in der Ebene liegt, in der sich der zentrale Teil des Strahlenbündels (24) erstreckt und die senkrecht zur Drehachse (29) verläuft, wobei das Kippen einen Kippwinkel (T) abdeckt, der zwischen einem ersten vorbestimmten Wert und einem zweiten vorbestimmten Wert variiert,
wobei das Röntgenstrahlenbündel (24) ein Liniensegment (4) beleuchtet, das im Wesentlichen in der Kippachse (28) liegt und die Länge des Liniensegments so eingestellt ist, dass sie gleich oder ungefähr gleich dem Innendurchmesser des Probenbehälters (11) ist, und
(e) Detektieren der durch die Probe hindurchgetretenen und von der Probe gebeugten Röntgenstrahlung mit dem Detektor (22) während eines Zeitintervalls, in dem die oben genannten Bewegungen des Trägers (19) ausgeführt werden.

2. Verfahren gemäss Anspruch 1, wobei die Dreh- und Kipp-Bewegungen des Trägers (19) gleichzeitig und kontinuierlich ausgeführt werden.

3. Verfahren gemäss Anspruch 1, wobei die Kippbewegung des Trägers (19) schrittweise ausgeführt wird, und wobei eine Drehung desselben über einen vorbestimmten Drehwinkel für jeden Kippschritt ausgeführt wird.

4. Verfahren gemäss einem der Ansprüche 1 bis 3, wobei die Zentralachse des Strahlenbündels (24) und die Drehachse (29) durch die Mitte (17) des planaren Träger (19) gehen, wenn sich letzterer in der Ausgangsposition befindet.

5. Verfahren gemäss einem der Ansprüche 1 bis 4, wobei die Strahlungsquelle (21) stationär ist.

6. Verfahren gemäss einem der Ansprüche 1 bis 5, wobei die Drehung des Trägers (19) einen Winkel abdeckt, der gleich oder nahe bei 360 Grad ist.

7. Verfahren gemäss einem der Ansprüche 1 bis 5, wobei die Drehung des Trägers (19) einen Winkel abdeckt, der kleiner als 360 Grad ist.

8. Verfahren gemäss einem der Ansprüche 1 bis 5, wobei die Drehung des Trägers (19) einen Winkel abdeckt, der grösser als 360 Grad ist.

9. Vorrichtung zur Durchlicht-Röntgenbeugungsanalyse einer Probe, wobei die Vorrichtung eine Röntgenstrahlungsquelle (21) umfasst, die Röntgenstrahlung zur Bestrahlung der Probe bereitstellt und einen Detektor (22) zum Detektieren von durch die Probe hindurchgetretener und gebeugter Röntgenstrahlung, wobei die Vorrichtung umfasst:
(a) eine Röntgenstrahlungsquelle (21), die zum Erzeugen eines streifenförmigen Röntgenstrahlenbündels (24) angepasst ist, welches einen streifenförmigen Bereich beleuchtet, wobei sich der zentrale Teil des Strahlenbündels entlang einer Ebene erstreckt,
(b) einen Träger (19), welcher zum Aufnehmen und Halten einer zu analysierenden Probe angepasst ist, wobei der Träger die planare Bodenfläche eines Probenbehälters (11) bildet, der einen inneren Durchmesser aufweist und für Röntgenstrahlung durchlässig ist,
(c) Mittel zum Positionieren des Trägers (19) und damit der Probe in einer Ausgangsposition, in welcher die Probe im Strahlengang des Strahlenbündels (24) liegt und in welcher eine Scheibe (27) der Probe von diesem Strahlenbündel (24) beleuchtet wird,
(d) Mittel zum Durchführen folgender Bewegungen des Trägers (19) bezüglich der oben genannten Ausgangsposition:
(d.1) eine Drehung des Trägers (19) und damit der Probe um eine Drehachse (29), die senkrecht zum Träger verläuft, wobei die Drehung einen vorbestimmten Drehwinkel abdeckt, und
(d.2) ein Kippen des Trägers (19) und damit der Probe um eine Kippachse (28), welche in der Ebene liegt, in der sich der zentrale Teil des Strahlenbündels (24) erstreckt und welche senkrecht zur Drehachse (29) verläuft, wobei das Kippen einen Kippwinkel (T) abdeckt, der zwischen einem ersten durch die Ausgangsposition des Trägers (19) gegebenen Kippwinkel Null und einem vorbestimmten Wert grösser als Null variiert,
(e) Fokussiermittel, die im Strahlengang des Röntgenstrahlenbündels (24) zwischen der Röntgenstrahlungsquelle (21) und dem Probenträger (19) angeordnet sind,
wobei die Fokussiermittel das Röntgenstrahlenbündel (24) in einem Liniensegment (4) fokussieren, das im Wesentlichen in der Kippachse (28) liegt, wobei die Länge des Liniensegments so eingestellt ist, dass sie gleich oder ungefähr gleich dem Innendurchmesser des Probenbehälters (11) ist, und
(f) einen Detektor (22) zum Detektieren der durch die Probe hindurchgetretenen und von der Probe gebeugten Röntgenstrahlung während eines Zeitintervalls, in dem die oben genannten Bewegungen des Trägers (19) ausgeführt werden.

10. Vorrichtung gemäss Anspruch 9, wobei die Zentralachse des Strahlenbündels (24) und die Drehachse (29) durch die Mitte (17) des planaren Trägers (19) gehen, wenn sich letzterer in der Ausgangsposition befindet.

11. Vorrichtung gemäss einem der Ansprüche 9 oder 10, wobei der Detektor (22) ein beweglicher Detektor ist.

12. Vorrichtung gemäss einem der Ansprüche 9 oder 10, wobei der Detektor (22) ein stationärer Detektor ist, welcher in einem Teil einer Kugelfläche liegt.

13. Vorrichtung gemäss einem der Ansprüche 9 bis 12, wobei die Strahlungsquelle (21) stationär ist.

14. Vorrichtung gemäss einem der Ansprüche 9 bis 13, wobei die Drehung einen Winkel abdeckt, der gleich oder nahe bei 360 Grad ist.

15. Vorrichtung gemäss einem der Ansprüche 9 bis 13, wobei die Drehung einen Winkel abdeckt, der kleiner als 360 Grad ist.

16. Vorrichtung gemäss einem der Ansprüche 9 bis 13, wobei die Drehung einen Winkel abdeckt, der grösser als 360 Grad ist.

17. Verfahren zur Durchlicht-Röntgenbeugungsanalyse einer Vielzahl von Proben mittels einer Vorrichtung umfassend eine Röntgenstrahlungsquelle (21) und einen Detektor (22) zum Detektieren von durch diese Probe hindurchgetretener und gebeugter Röntgenstrahlung, wobei das Verfahren umfasst:
(a) Platzieren einer Vielzahl zu analysierenden Proben auf entsprechenden Trägerelementen (19) eines Probenhalters (12), wobei die entsprechenden Trägerelemente (19) planare Trägerelemente sind, wobei jedes Trägerelement die Bodenfläche eines entsprechenden Probenbehälters (11) bildet welcher einen Innendurchmesser aufweist und für Röntgenstrahlung durchlässig ist,
(b) Mittels einer Röntgenstrahlungsquelle (21) Erzeugen eines streifenförmigen Röntgenstrahlenbündels (24), welches einen streifenförmigen Bereich beleuchtet, wobei sich der zentrale Teil des Strahlenbündels entlang einer Ebene erstreckt,
(c) Positionieren des Probenhalters (12) in einer Vorrichtung, welche Mittel zum Bewegen und Positionieren des Probenhalters umfasst, so dass eine vorausgewählte Probe im Strahlengang des Strahlenbündels (24) positioniert werden kann,
(d) Positionieren eines vorausgewählten Trägerelements (19) des Probenhalters (12) und damit der Probe auf diesem Trägerelement in einer Ausgangsposition, in welcher die Probe im Strahlengang des Strahlenbündels (24) liegt und in welcher eine Scheibe (27) der Probe von diesem Strahlenbündel (24) beleuchtet wird,
(e) Ausführen der folgenden Bewegungen des vorausgewählten Trägerelements (19) bezüglich der oben genannten Ausgangsposition:
(e.1) eine Drehung des vorausgewählten Trägerelements (19) und damit der Probe um eine Drehachse (29), die senkrecht zum Trägerelement verläuft, wobei die Drehung einen vorbestimmten Drehwinkel abdeckt, und
(e.2) ein Kippen des vorausgewählten Trägerelements (19) und damit der Probe um eine Kippachse (28) und mit einem Kippwinkel (T), der als Winkel definiert ist, welchen die Drehachse (29) mit der Ebene bildet, in der sich der zentrale Teil des Strahlenbündels (24) erstreckt, wobei die Kippachse in der Ebene liegt, in der sich der zentrale Teil des Strahlenbündels (24) erstreckt und senkrecht zur Drehachse (29) verläuft, wobei das Kippen einen Kippwinkel (T) abdeckt, der zwischen einem ersten vorbestimmten Wert und einem zweiten vorbestimmten Wert variiert,
wobei das Röntgenstrahlenbündel (24) ein Liniensegment (4) beleuchtet, das im Wesentlichen in der Kippachse (28) liegt und die Länge des Liniensegments so eingestellt ist, dass sie gleich oder ungefähr gleich dem Innendurchmesser des Probenbehälters ist, und
(f) Detektieren der durch die Probe hindurchgetretenen und von der Probe gebeugten Röntgenstrahlung mit dem Detektor (22) während eines Zeitintervalls, in dem die oben genannten Bewegungen des Trägerelements (19) ausgeführt werden.

18. Verfahren gemäss Anspruch 17, wobei die Dreh- und Kipp-Bewegungen des Trägerelements (19) gleichzeitig und kontinuierlich ausgeführt werden.

19. Verfahren gemäss Anspruch 17, wobei die Kippbewegung des Trägerelements (19) schrittweise ausgeführt wird und wobei eine Drehung desselben über einen vorbestimmten Drehwinkel für jeden Kippschritt ausgeführt wird.

20. Verfahren gemäss einem der Ansprüche 17 bis 19, wobei die Zentralachse des Strahlenbündels (24) und die Drehachse (29) durch die Mitte (17) des planaren Trägerelements (19) gehen, wenn sich letzteres in der Ausgangsposition befindet.

21. Verfahren gemäss einem der Ansprüche 17 bis 20, wobei die Strahlungsquelle (21) stationär ist.

22. Verfahren gemäss einem der Ansprüche 17 bis 21, wobei die Drehung des Trägerelements (19) einen Winkel abdeckt, der gleich oder nahe bei 360 Grad ist.

23. Verfahren gemäss einem der Ansprüche 17 bis 21, wobei die Drehung des Trägerelements (19) einen Winkel abdeckt, der kleiner als 360 Grad ist.

24. Verfahren gemäss einem der Ansprüche 17 bis 21, wobei die Drehung des Trägerelements (19) einen Winkel abdeckt, der grösser als 360 Grad ist.

25. Verfahren gemäss Anspruch 17, ferner umfassend Wiederholen der Schritte (e) und (f) für jede einzelne der Vielzahl von Proben im Probenhalter.

26. Vorrichtung zur Durchlicht-Röntgenbeugungsanalyse einer Vielzahl von Proben mittels einer Vorrichtung umfassend eine Röntgenstrahlungsquelle (21) und einen Detektor (22) zum Detektieren von durch eine Probe hindurchgetretener und gebeugter Röntgenstrahlung, wobei die Vorrichtung umfasst:
(a) eine Röntgenstrahlungsquelle (21), die zum Erzeugen eines streifenförmigen Röntgenstrahlenbündels (24) angepasst ist, welches einen streifenförmigen Bereich beleuchtet, wobei sich der zentrale Teil des Strahlenbündels entlang einer Ebene erstreckt,
(b) einen Probenhalter (12), der eine Vielzahl von Trägerelementen (19) umfasst, von denen jedes zum Aufnehmen und Halten einer zu untersuchenden Probe angepasst ist, wobei jedes der Trägerelemente die planare Bodenfläche eines entsprechenden Probenbehälters (11) bildet, der einen Innendurchmesser aufweist und für Röntgenstrahlung durchlässig ist,
(c) Mittel zum Positionieren eines vorausgewählten Trägerelements und damit einer auf dem Trägerelement platzierten Probe in einer Ausgangsposition, in welcher die Probe im Strahlengang des Strahlenbündels (24) liegt und in welcher eine Scheibe (27) der Probe von diesem Strahlenbündel (24) beleuchtet wird,
(d) Mittel zum Durchführen folgender Bewegungen des vorausgewählten Trägerelements (19) bezüglich dessen oben genannter Ausgangsposition:
(d.1) eine Drehung des vorausgewählten Trägerelements (19) und damit der Probe um eine Drehachse (29), die senkrecht zum vorausgewählten Trägerelement verläuft, wobei die Drehung einen vorbestimmten Drehwinkel abdeckt, und
(d.2) ein Kippen des vorausgewählten Trägerelements (19) und damit der Probe um eine Kippachse (28), welche in der Ebene liegt, in der sich der zentrale Teil des Strahlenbündels (24) erstreckt und welche senkrecht verläuft zur Drehachse (29), wobei das Kippen einen Kippwinkel (T) abdeckt, der zwischen einem ersten durch die Ausgangsposition des Trägerelements (19) gegebenen Kippwinkel Null und einem vorbestimmten Wert grösser als Null variiert,
(e) Fokussiermittel, die im Strahlengang des Röntgenstrahlenbündels (24) zwischen der Röntgenstrahlungsquelle (21) und dem Probenträger (19) angeordnet sind,
wobei die Fokussiermittel das Röntgenstrahlenbündel (24) in einem Liniensegment (4) fokussieren, das im Wesentlichen in der Kippachse (28) liegt, wobei die Länge des Liniensegments so eingestellt ist, dass sie gleich oder ungefähr gleich dem Innendurchmesser des Probenbehälters (11) ist, und
(f) einen Detektor (22) zum Detektieren der durch die Probe hindurchgetretenen und von der Probe gebeugten Röntgenstrahlung während eines Zeitintervalls, in dem die oben genannten Bewegungen des Trägerelements (19) ausgeführt werden.

27. Vorrichtung gemäss Anspruch 26, wobei die Zentralachse des Strahlenbündels (24) und die Drehachse (29) durch die Mitte (17) des planaren Trägerelements (19) gehen, wenn sich letzteres in der Ausgangsposition befindet.

28. Vorrichtung gemäss einem der Ansprüche 26 oder 27, wobei der Detektor (22) ein beweglicher Detektor ist.

29. Vorrichtung gemäss einem der Ansprüche 26 oder 27, wobei der Detektor (22) ein stationärer Detektor ist, welcher in einem Teil einer Kugelfläche liegt.

30. Vorrichtung gemäss einem der Ansprüche 26 bis 29, wobei die Strahlungsquelle (21) stationär ist.

31. Vorrichtung gemäss einem der Ansprüche 26 bis 30, wobei die Drehung einen Winkel abdeckt, der gleich oder nahe bei 360 Grad ist.

32. Vorrichtung gemäss einem der Ansprüche 26 bis 30, wobei die Drehung einen Winkel abdeckt, der kleiner als 360 Grad ist.

33. Vorrichtung gemäss einem der Ansprüche 26 bis 30, wobei die Drehung einen Winkel abdeckt, der grösser als 360 Grad ist.

## Revendications

1. Procédé pour l'analyse par diffraction de rayons X en mode de transmission d'un échantillon au moyen d'un appareil comprenant une source de rayonnement de rayons X (21) fournissant un rayonnement de rayons X pour irradier ledit échantillon et un détecteur (22) pour détecter le rayonnement de rayons X transmis à travers ledit échantillon et diffractés par celui-ci, ledit procédé comprenant
(a) le placement d'un échantillon à analyser sur un substrat (19) adapté à recevoir et à maintenir ledit échantillon, ledit substrat formant la paroi inférieure plane d'un récipient à échantillon (11) ayant un diamètre intérieur et étant transparent au rayonnement des rayons X,
(b) la génération au moyen d'une source de rayonnement de rayons X (21) d'un faisceau de rayons X en forme de bande (24) irradiant une région en forme de bande, la partie centrale dudit faisceau s'étendant le long d'un plan,
(c) le positionnement dudit substrat et ainsi dudit échantillon dans une position initiale dans laquelle ledit échantillon est disposé sur le chemin dudit faisceau (24) et dans lequel une tranche (27) dudit échantillon est irradiée par ledit faisceau (24),
(d) l'exécution des mouvements suivants du substrat (19) par rapport à sa position initiale mentionnée ci-dessus :
(d.1) une rotation dudit substrat (19) et ainsi dudit échantillon autour d'un axe de rotation (29) perpendiculaire audit substrat, ladite rotation couvrant un angle de rotation prédéterminé, et
(d.2) une inclinaison dudit substrat (19) et ainsi dudit échantillon autour d'un axe d'inclinaison (28) et d'un angle d'inclinaison (T) défini comme l'angle formé par ledit axe de rotation (29) avec ledit plan, à travers lequel s'étend la partie centrale dudit faisceau (24), ledit axe d'inclinaison se trouvant dans ledit plan à travers lequel s'étend la partie centrale dudit faisceau (24) et étant perpendiculaire audit axe de rotation (29), ladite inclinaison couvrant un angle d'inclinaison (T) variant entre une première valeur prédéterminée et une seconde valeur prédéterminée,
dans lequel ledit faisceau de rayons X (24) illumine un segment de droite (4) se trouvant sensiblement dans ledit axe d'inclinaison (28), la longueur dudit segment de droite étant réglée de manière à être égale ou approximativement égale au diamètre intérieur du récipient à échantillon (11), et
(e) la détection au moyen dudit détecteur (22) du rayonnement de rayons X transmis à travers ledit échantillon et diffractés par celui-ci pendant un intervalle de temps durant lequel les mouvements du substrat (19) mentionné ci-dessus sont effectués.

2. Procédé selon la revendication 1, dans lequel lesdits mouvements de rotation et d'inclinaison dudit substrat (19) sont effectués simultanément et en continu.

3. Procédé selon la revendication 1, dans lequel ledit mouvement d'inclinaison dudit substrat (19) est effectué par pas et sa rotation couvrant un angle de rotation prédéterminé est effectuée à chaque pas d'inclinaison.

4. Procédé selon l'une quelconque des revendications 1 à 3, dans lequel l'axe central dudit faisceau (24) et ledit axe de rotation (29) passent par le centre (17) dudit substrat plan (19) lorsque ce dernier est dans ladite position initiale.

5. Procédé selon l'une quelconque des revendications 1 à 4, dans lequel ladite source de rayonnement (21) est fixe.

6. Procédé selon l'une quelconque des revendications 1 à 5, dans lequel ladite rotation du substrat (19) couvre un angle égal à 360 degrés ou proche de cette valeur.

7. Procédé selon l'une quelconque des revendications 1 à 5, dans lequel ladite rotation du substrat (19) couvre un angle inférieur à 360 degrés.

8. Procédé selon l'une quelconque des revendications 1 à 5, dans lequel ladite rotation du substrat (19) couvre un angle supérieur à 360 degrés.

9. Appareil pour l'analyse par diffraction de rayons X en mode de transmission d'un échantillon, ledit appareil comportant une source de rayonnement de rayons X (21) fournissant un rayonnement de rayons X pour irradier ledit échantillon et un détecteur (22) pour détecter le rayonnement de rayons X transmis à travers ledit échantillon et diffractés par celui-ci, ledit appareil comprenant
(a) une source de rayonnement de rayons X (21) adaptée à fournir un faisceau de rayons X en forme de bande (24) irradiant une région en forme de bande, la partie centrale dudit faisceau s'étendant le long d'un plan,
(b) un substrat (19) adapté à recevoir et à maintenir un échantillon à analyser, ledit substrat formant la paroi inférieure plane d'un récipient à échantillon (11) ayant un diamètre intérieur et étant transparent au rayonnement des rayons X,
(c) un moyen pour positionner ledit substrat (19) et ainsi ledit échantillon dans une position initiale dans laquelle ledit échantillon est disposé sur le chemin dudit faisceau (24) et dans lequel une tranche (27) dudit échantillon est irradiée par ledit faisceau (24),
(d) un moyen pour effectuer les mouvements suivants du substrat (19) par rapport à la position initiale mentionnée ci-dessus :
(d.1) une rotation dudit substrat (19) et ainsi dudit échantillon autour d'un axe de rotation (29) perpendiculaire audit substrat, ladite rotation couvrant un angle de rotation prédéterminé, et
(d.2) une inclinaison dudit substrat (19) et ainsi dudit échantillon autour d'un axe d'inclinaison (28) se trouvant dans ledit plan, à travers lequel s'étend la partie centrale dudit faisceau (24), ledit axe d'inclinaison se trouvant dans ledit plan à travers lequel s'étend la partie centrale dudit faisceau (24) et étant perpendiculaire audit axe de rotation (29), ladite inclinaison couvrant un angle d'inclinaison (T) variant entre un angle d'inclinaison nul défini par ladite position initiale dudit substrat (19) et une valeur prédéterminée supérieure à zéro,
(e) un moyen de focalisation situé dans le chemin dudit faisceau de rayons X (24) et entre ladite source de rayonnement de rayons X (21) et ledit substrat d'échantillon (19),
dans lequel ledit moyen de focalisation focalise ledit faisceau de rayons X (24) dans un segment de droite (4) se trouvant sensiblement dans ledit axe d'inclinaison (28), la longueur dudit segment de droite étant réglée de manière à être égale ou approximativement égale au diamètre intérieur du récipient à échantillon (11), et
(f) un détecteur (22) pour détecter le rayonnement de rayons X transmis à travers ledit échantillon et diffractés par celui-ci pendant un intervalle de temps durant lequel les mouvements du substrat (19) mentionné ci-dessus sont effectués.

10. Appareil selon la revendication 9, dans lequel l'axe central dudit faisceau (24) et ledit axe de rotation (29) passent par le centre (17) dudit substrat plan (19) lorsque ce dernier est dans ladite position initiale.

11. Appareil selon l'une quelconque des revendications 9 ou 10, dans lequel ledit détecteur (22) est un détecteur mobile.

12. Appareil selon l'une quelconque des revendications 9 ou 10, dans lequel ledit détecteur (22) est un détecteur fixe se trouvant dans une partie d'une surface sphérique.

13. Appareil selon l'une quelconque des revendications 9 à 12, dans lequel ladite source de rayonnement (21) est fixe.

14. Appareil selon l'une quelconque des revendications 9 à 13, dans lequel ladite rotation couvre un angle égal à 360 degrés ou proche de cette valeur.

15. Appareil selon l'une quelconque des revendications 9 à 13, dans lequel ladite rotation couvre un angle inférieur à 360 degrés.

16. Appareil selon l'une quelconque des revendications 9 à 13, dans lequel ladite rotation couvre un angle supérieur à 360 degrés.

17. Procédé pour l'analyse par diffraction de rayons X en mode de transmission d'une pluralité d'échantillons au moyen d'un appareil comprenant une source de rayonnement de rayons X (21) et un détecteur (22) pour détecter le rayonnement de rayons X transmis à travers ledit échantillon et diffractés par celui-ci, ledit procédé comprenant
(a) le placement d'une pluralité d'échantillons à analyser sur des éléments de substrat respectifs (19) d'un porte-échantillon (12), les éléments de substrat respectifs (19) étant des éléments de substrat plans, chaque élément de substrat constituant le fond d'un récipient à échantillon respectif (11) ayant un diamètre intérieur et étant transparent au rayonnement des rayons X,
(b) la génération au moyen d'une source de rayonnement de rayons X (21) d'un faisceau de rayons X en forme de bande (24) irradiant une région en forme de bande, la partie centrale dudit faisceau s'étendant le long d'un plan,
(c) le positionnement dudit porte-échantillon (12) dans un appareil comprenant un moyen pour déplacer et positionner ledit porte-échantillon de façon à pouvoir positionner un échantillon sélectionné à l'avance dans le chemin dudit faisceau (24),
(d) le positionnement d'un élément de substrat sélectionné à l'avance (19) dudit porte-échantillon (12) et ainsi de l'échantillon sur cet élément de substrat dans une position initiale dans laquelle ledit échantillon se trouve dans le chemin dudit faisceau (24) et dans laquelle une tranche (27) dudit échantillon est irradiée par ledit faisceau (24),
(e) l'exécution des mouvements suivants dudit élément de substrat sélectionné à l'avance (19) par rapport à la position initiale mentionnée ci-dessus :
(e.1) une rotation dudit élément de substrat sélectionné à l'avance (19) et ainsi dudit échantillon autour d'un axe de rotation (29) perpendiculaire audit élément de substrat, ladite rotation couvrant un angle de rotation prédéterminé, et
(e.2) une inclinaison dudit élément de substrat sélectionné à l'avance (19) et ainsi dudit échantillon autour d'un axe d'inclinaison (28) et d'un angle d'inclinaison (T) défini comme l'angle formé par ledit axe de rotation (29) avec ledit plan, à travers lequel s'étend la partie centrale dudit faisceau (24), ledit axe d'inclinaison se trouvant dans ledit plan à travers lequel s'étend la partie centrale dudit faisceau (24) et étant perpendiculaire audit axe de rotation (29), ladite inclinaison couvrant un angle d'inclinaison (T) variant entre une première valeur prédéterminée et une seconde valeur prédéterminée,
dans lequel ledit faisceau de rayons X (24) illumine un segment de droite (4) se trouvant sensiblement dans ledit axe d'inclinaison (28), la longueur dudit segment de droite étant réglée de manière à être égale ou approximativement égale au diamètre intérieur du récipient à échantillon, et
(f) la détection au moyen dudit détecteur (22) du rayonnement de rayons X transmis à travers ledit échantillon et diffractés par celui-ci pendant un intervalle de temps durant lequel les mouvements de l'élément de substrat sélectionné à l'avance (19) mentionné ci-dessus sont effectués.

18. Procédé selon la revendication 17, dans lequel lesdits mouvements de rotation et d'inclinaison dudit élément de substrat (19) sont effectués simultanément et en continu.

19. Procédé selon la revendication 17, dans lequel ledit mouvement d'inclinaison dudit élément de substrat (19) est effectué par pas et sa rotation couvrant un angle de rotation prédéterminé est effectuée à chaque pas d'inclinaison.

20. Procédé selon l'une quelconque des revendications 17 à 19, dans lequel l'axe central dudit faisceau (24) et ledit axe de rotation (29) passent par le centre (17) dudit élément de substrat plan (19) lorsque ce dernier est dans ladite position initiale.

21. Procédé selon l'une quelconque des revendications 17 à 20, dans lequel ladite source de rayonnement (21) est fixe.

22. Procédé selon l'une quelconque des revendications 17 à 21, dans lequel ladite rotation de l'élément de substrat (19) couvre un angle égal à 360 degrés ou proche de cette valeur.

23. Procédé selon l'une quelconque des revendications 17 à 21, dans lequel ladite rotation de l'élément de substrat (19) couvre un angle inférieur à 360 degrés.

24. Procédé selon l'une quelconque des revendications 17 à 21, dans lequel ladite rotation de l'élément de substrat (19) couvre un angle supérieur à 360 degrés.

25. Procédé selon la revendication 17, comprenant en outre la répétition des étapes (e) et (f) pour chaque échantillon de la pluralité d'échantillons situés dans le porte-échantillon.

26. Appareil pour l'analyse par diffraction de rayons X en mode de transmission d'une pluralité d'échantillons au moyen d'un appareil comprenant une source de rayonnement de rayons X (21) et un détecteur (22) pour détecter le rayonnement de rayons X transmis à travers ledit échantillon et diffractés par celui-ci, ledit appareil comprenant
(a) une source de rayonnement de rayons X (21) adaptée à fournir un faisceau de rayons X en forme de bande (24) irradiant une région en forme de bande, la partie centrale dudit faisceau s'étendant le long d'un plan,
(b) un porte-échantillon (12) comprenant une pluralité d'éléments de substrat (19) dont chacun est adapté à recevoir et à maintenir un échantillon à analyser, chacun desdits éléments de substrat constituant la paroi inférieure plane d'un récipient à échantillon respectif (11) ayant un diamètre intérieur et étant transparent au rayonnement des rayons X,
(c) un moyen pour positionner un élément de substrat sélectionné à l'avance et ainsi un échantillon placé sur cet élément dans une position initiale dans laquelle ledit échantillon se trouve dans le chemin dudit faisceau (24) et dans laquelle une tranche (27) dudit échantillon est irradiée par ledit faisceau (24),
(d) un moyen pour exécuter les mouvements suivants dudit élément de substrat sélectionné à l'avance (19) par rapport à sa position initiale mentionnée ci-dessous :
(d.1) une rotation dudit élément de substrat sélectionné à l'avance (19) et ainsi dudit échantillon autour d'un axe de rotation (29) perpendiculaire audit élément de substrat, ladite rotation couvrant un angle de rotation prédéterminé, et
(d.2) une inclinaison dudit élément de substrat sélectionné à l'avance (19) et ainsi dudit échantillon autour d'un axe d'inclinaison (28) se trouvant dans ledit plan à travers lequel s'étend la partie centrale dudit faisceau (24) et étant perpendiculaire audit axe de rotation (29), ladite inclinaison couvrant un angle d'inclinaison (T) variant entre un angle d'inclinaison nul défini par ladite position initiale dudit élément de substrat (19) et une valeur prédéterminée supérieure à zéro,
(e) un moyen de focalisation situé dans le chemin dudit faisceau de rayons X (24) et entre ladite source de rayonnement de rayons X (21) et ledit substrat d'échantillon (19),
dans lequel ledit moyen de focalisation focalise ledit faisceau de rayons X (24) dans un segment de droite (4) se trouvant sensiblement dans ledit axe d'inclinaison (28), la longueur dudit segment de droite étant réglée de manière à être égale ou approximativement égale au diamètre intérieur du récipient à échantillon (11), et
(f) un détecteur (22) pour détecter le rayonnement de rayons X transmis à travers ledit échantillon et diffractés par celui-ci pendant un intervalle de temps durant lequel les mouvements de l'élément de substrat (19) mentionné ci-dessus sont effectués.

27. Appareil selon la revendication 26, dans lequel l'axe central dudit faisceau (24) et ledit axe de rotation (29) passent par le centre (17) dudit élément de substrat plan (19) lorsque ce dernier est dans ladite position initiale.

28. Appareil selon l'une quelconque des revendications 26 ou 27, dans lequel ledit détecteur (22) est un détecteur mobile.

29. Appareil selon l'une quelconque des revendications 26 ou 27, dans lequel ledit détecteur (22) est un détecteur fixe se trouvant dans une partie d'une surface sphérique.

30. Appareil selon l'une quelconque des revendications 26 à 29, dans lequel ladite source de rayonnement (21) est fixe.

31. Appareil selon l'une quelconque des revendications 26 à 30, dans lequel ladite rotation couvre un angle qui est égal à 360 degrés ou proche de cette valeur.

32. Appareil selon l'une quelconque des revendications 26 à 30, dans lequel ladite rotation couvre un angle inférieur à 360 degrés.

33. Appareil selon l'une quelconque des revendications 26 à 30, dans lequel ladite rotation couvre un angle supérieur à 360 degrés.
